# FASCICULE DE BREVET EUROPEEN

(11) **EP 3 877 667 B1**
(45) Date de publication et mention de la délivrance du brevet: **27.03.2024**
(21) Numéro de dépôt: 19818208.1
(22) Date de dépôt: 04.11.2019
(51) Int. Cl.: B60T 5/00, B60T 17/04, B61H 5/00, F16D 69/04, F16D 65/00

(54) **SYSTEME DE CAPTATION DE PARTICULES DE FREIN A DISQUE FERROVIAIRE**
SYSTEM ZUM SAMMELN VON PARTIKELN VON EISENBAHNSCHEIBENBREMSEN
SYSTEM FOR COLLECTING PARTICLES FROM RAILWAY DISC BRAKES

(30) Priorité: 08.11.2018 FR 1860320
(43) Date de publication de la demande: 15.09.2021
(73) Titulaire: Tallano Technologies, 75015 Paris (FR)
(72) Inventeur: MAISTRE, Adrien, 92100 BOULOGNE BILLANCOURT (FR); ADAMCZAK, Loïc, 92100 BOULOGNE BILLANCOURT (FR)
(74) Mandataire: Plasseraud IP
(86) Numéro de dépôt international: PCT/FR2019/052608
(87) Numéro de publication internationale: WO 2020/094962

(56) Documents cités:
- WO-A1-2018/065541
- GB-A- 2 515 063
- JP-A- 2005 036 829
- JP-A- 2008 281 060

## Description

La présente invention concerne le freinage des matériels roulants ferroviaires et notamment les ensembles à friction des systèmes de freinage des matériels roulants ferroviaires. On entend par de tels matériels tous véhicules configurés pour rouler sur des rails, tels que trains, tramways, métropolitains.

Le système de freinage comporte généralement un disque solidaire d'une roue ou d'un essieu du matériel roulant ferroviaire. Le système de freinage comporte en outre un ensemble à friction qui comprend un porte-semelle qui supporte une semelle de friction. La semelle de friction comprend usuellement des moyens de fixation au porte-semelle et un patin frottant. Lorsqu'un conducteur actionne le système de freinage, le patin frottant de la semelle de friction vient au contact du disque pour exercer une force de freinage sur le disque. Ainsi, par frottement, la semelle de friction freine le disque solidaire de la roue ou de l'essieu. Généralement, le matériel roulant ferroviaire comporte deux ensembles à friction, disposés de part et d'autre du disque de façon à prendre en tenaille, ou autrement dit en sandwich le disque pour le comprimer des deux côtés.

Le patin frottant de la semelle de friction comporte habituellement un matériau métallique, tel que la fonte, un matériau fritté ou un matériau composite. Ainsi, lorsque le patin frottant de la semelle de friction frotte contre le disque, des particules de matière issues du patin frottant et du disque sont émises dans l'atmosphère ambiante autour de l'ensemble à friction. Ainsi, le système de freinage émet une pollution atmosphérique sous forme de particules plus ou moins fines.

WO 2018065541 décrit un ensemble à friction où le patin de la semelle comporte une rainure de collecte ouverte sur la face de friction et sur un bord interne ou externe du patin, et un trou qui débouche dans cette rainure et qui est relié à un dispositif d'aspiration.

GB 2515063 décrit un ensemble à friction où le patin de la semelle est en communication fluidique avec un vérin hydraulique apte à apporter du fluide sur la face de friction du patin.

JP2005036829 décrit un ensemble à friction où la face de friction du patin de la semelle est en communication fluidique avec un dispositif d'aspiration.

JP2008281060 décrit un ensemble à friction où le patin de la semelle présente deux rainures de collecte qui débouchent sur la face de friction du patin et qui sont reliées à des trous traversant la semelle.

On a donc cherché à capter les particules de matière émises lors du freinage, notamment en disposant un dispositif d'aspiration, alimenté par une pompe, à proximité d'une zone d'émission des particules issues du patin frottant de la semelle de friction.

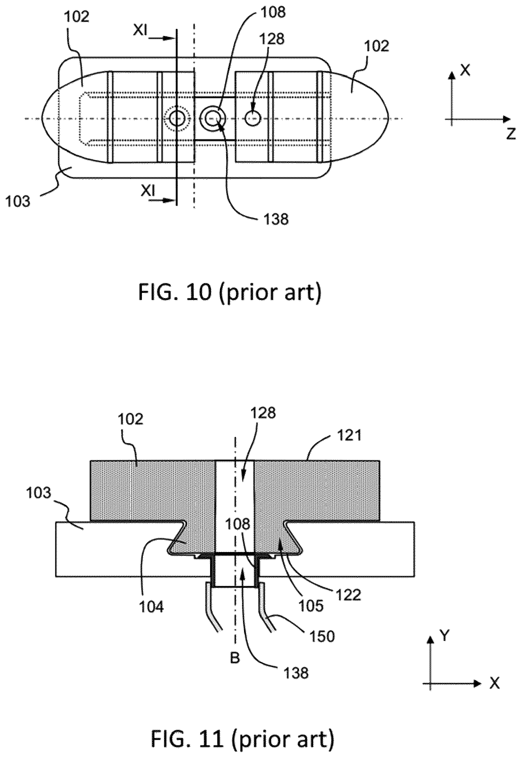

Une solution pour résoudre ce problème est l'ensemble de friction illustré en figures 10 et 11, qui représente l'art antérieur.

La figure 10 est une vue de dessus de cet ensemble, et la figure 11 une coupe transversale selon la ligne XI-XI de la figure 10.

Le porte-semelle 103 s'étend longitudinalement selon une direction longitudinale Z, et transversalement selon une direction transversale X. Le porte-semelle 103 comporte dans le plan X-Z une face supérieure destinée à accueillir une semelle de friction 102, et une face inférieure.

L'axe perpendiculaire à ces deux faces et au plan X-Z est un axe Y.

Le porte-semelle 103 présente sur sa face supérieure une glissière d'accueil 105 concave en queue d'aronde, qui s'étend longitudinalement depuis une première extrémité du porte-semelle 103 jusqu'à proximité de la seconde extrémité du porte-semelle 103 où cette glissière est non-débouchante. Le porte-semelle 103 comprend sur l'axe longitudinal Z deux trous traversant 138 espacés. Chaque trou traversant 138 relie la face inférieure au fond de la glissière 105 sur la face supérieure.

La semelle de friction 102 est en deux parties identiques, où chaque partie présente une face de friction 121 destinée à être en contact de friction avec le disque (non-représenté) du véhicule et une face opposée 122. Cette face opposée 122 présente un profilé 104 convexe en queue d'aronde configuré pour coopérer avec la glissière d'accueil 105. En utilisation, on enfonce une première partie de la semelle 102 selon l'axe longitudinal Z en faisant coulisser le profilé 104 dans la glissière 105, jusqu'en butée de la glissière 105. Puis on enfonce la seconde partie de la semelle 102 selon l'axe longitudinal Z en faisant coulisser le profilé 104 dans la glissière 105, jusqu'en butée de la première partie de la semelle 102, les surfaces en contact de la première partie et de la seconde partie étant idéalement conformées pour s'épouser sur toute leur surface.

Chacune des parties de la semelle 102 comprend un conduit 128 orienté selon l'axe Y. Lorsque ces parties sont fixées sur le porte-semelle 103 en utilisation, chacun des deux conduits 128 est situé en regard d'un trou 138. On désigne par axe B l'axe principal d'un conduit 128 et du trou 138 situé en regard, ce conduit 128 et ce trou 138 étant donc coaxiaux. Ainsi, chaque conduit 128 forme, avec un des trous traversant 138 ménagé dans le porte-semelle 103, un circuit qui permet d'aspirer des particules émises par la semelle de friction 102 lors du freinage.

Une bague de jonction 108, constituée d'un tube et d'une collerette prolongeant radialement et vers l'extérieur ce tube à une de ses extrémités, est montée dans le trou 138. Le tube est inséré dans le trou 138, le diamètre externe du tube étant égal au diamètre interne du trou 138 afin d'assurer la meilleure étanchéité possible. La collerette se loge dans un logement annulaire du porte-semelle 103, ce logement étant centré sur l'axe principal B et en regard de la face opposée 122 de la semelle 102. Ainsi, la collerette est prise en sandwich entre le profilé de la semelle 102 et le fond de la glissière 105 du porte-semelle 103. La profondeur du logement annulaire (selon l'axe principal B) est sensiblement égal à l'épaisseur de la collerette de telle sorte qu'une fois dans son logement, la collerette est en contact avec à la fois le porte-semelle 103 et la face 122 du profilé 104 de la semelle 102.

La bague de jonction 108 traverse entièrement le porte-semelle 103 et en dépasse sur sa face opposée à sa face munie de la glissière 105. Sur cette extrémité du tube de la bague 108 est fixé un tuyau 150 qui est relié à un dispositif d'aspiration (non-représenté) et qui permet l'aspiration au travers du conduit 128 et du trou 138 des particules issues du freinage du véhicule ferroviaire.

La bague de jonction 108 sert à guider les particules issues du freinage depuis le conduit 128 de la semelle 102 vers le trou traversant 138 du porte-semelle 3. La bague de jonction 108 vise donc à prévenir d'éventuelles fuites au travers du conduit 128 et du trou 138. Notamment, la bague de jonction 108 vise à limiter la quantité de particules issues du freinage qui pourraient se glisser dans l'interstice à l'interface entre la semelle de friction 102 et le porte-semelle 103, et surtout à empêcher un flux d'air provenant de l'extérieur de pénétrer par cet interstice dans le trou 138, ce qui dégraderait l'aspiration par le dispositif d'aspiration.

Ainsi, on connaît un ensemble à friction pour système de freins à disques ferroviaire pour matériel roulant ferroviaire, cet ensemble comprenant d'une part un porte-semelle comprenant une face supérieure avec une glissière d'accueil, et une face inférieure, et d'autre part au moins une semelle en matériau de friction comprenant une première face qui est la face de friction, et une seconde face munie un profilé configuré pour coopérer avec la glissière d'accueil, la semelle comprenant au moins un conduit mettant en communication étanche un premier espace bordé par la première face et un second espace bordé par la seconde face, cet ensemble à friction comprenant en outre au moins un trou traversant d'axe central B, ménagé dans le porte-semelle et situé en regard d'un du au moins un conduit, et au moins une bague de jonction agencée dans le au moins un trou traversant et établissant une jonction avec le conduit.

Cependant, en utilisation, un tel ensemble à friction ne permet pas de prévenir efficacement un passage d'air à l'interface entre la semelle 102 et le porte-semelle 103 au niveau du conduit 128 et du trou 138.

En effet, les jeux à l'interface entre le porte-semelle 103 et la semelle 102 empêchent la bague de jonction 108 d'assurer une étanchéité suffisante avec la semelle 102.

La présente invention vise à remédier à cet inconvénient.

L'invention vise à proposer un ensemble à friction qui permette, pour une même force d'aspiration, d'aspirer de façon plus efficace les particules issues du freinage du véhicule ferroviaire.

Ce but est atteint grâce au fait que l'ensemble à friction comporte un mécanisme de rappel qui est apte à plaquer la au moins une bague de jonction contre le profilé.

Grâce à ces dispositions, une étanchéité est assurée entre la bague de jonction et la semelle, et par conséquent entre le porte-semelle et la semelle au travers du conduit et du trou traversant. Cette étanchéité au travers du porte-semelle et de la semelle permet d'aspirer de façon plus efficace les particules issues du freinage du véhicule ferroviaire et émises au niveau de la face de friction (première face) de la semelle.

Avantageusement, le mécanisme de rappel est un ressort.

Ainsi, le mécanisme de rappel est simple à assembler dans l'ensemble à friction, et possède une excellente durabilité.

Avantageusement, la bague de jonction présente un tube et une collerette, le mécanisme de rappel étant apte à plaquer la collerette contre le profilé.

Ainsi, une étanchéité est assurée par contact entre toute la surface de la collerette et la surface du profilé.

Avantageusement, la bague de jonction présente un tube et une collerette, et le ressort est un ressort hélicoïdal prenant appui à une extrémité sur la collerette à son autre extrémité sur le porte-semelle.

Ainsi, le montage du mécanisme de rappel dans l'ensemble à friction est facilité.

Avantageusement, la bague de jonction présente un tube et une collerette conique, la collerette agissant comme le mécanisme de rappel.

Ainsi, l'utilisation d'une pièce supplémentaire en tant que mécanisme de rappel n'est pas nécessaire.

Avantageusement, la bague de jonction présente un tube et une collerette, et la face inférieure du porte-semelle est munie d'un chapeau qui forme avec le trou traversant une chambre, et le mécanisme de rappel est un ressort hélicoïdal entourant le tube et prenant appui à une extrémité sur la collerette et à son autre extrémité sur la face interne du chapeau.

Avantageusement, la périphérie radialement externe de la collerette présente un chanfrein qui s'étend selon la surface d'un cône d'axe A.

Ainsi, lorsqu'on glisse le profilé dans la glissière, le profilé exerce une force sur le chanfrein qui contribue à enfoncer automatiquement la bague d'étanchéité dans le trou.

Avantageusement, la semelle comprend deux conduits, et le porte-semelle comporte deux trous traversant, chacun des conduits étant en regard d'un des deux trous traversant.

Ainsi, l'aspiration des particules est plus efficace.

Avantageusement, la bague de jonction présente un tube et une collerette, la collerette agissant comme le mécanisme de rappel, le tube se prolongeant à son extrémité opposée à l'extrémité portant la collerette par une plaque qui épouse la face inférieure du porte-semelle.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue de dessus d'un ensemble à friction selon l'invention ;
- la figure 2 est une vue en coupe transversale selon la ligne II-II de l'ensemble à friction de la figure 1 ;
- la figure 3 est une vue en coupe transversale selon la ligne III-III de l'ensemble à friction de la figure 1 ;
- la figure 4 est une vue en coupe transversale de la semelle et de la bague de jonction selon un autre mode de réalisation de l'ensemble à friction ;
- la figure 5 est une vue en coupe transversale de la semelle et de la bague de jonction selon encore un autre mode de réalisation de l'ensemble à friction ;
- la figure 6 est une vue en perspective de la bague de jonction de l'ensemble à friction de la figure 1 ;
- la figure 7 est une vue en coupe transversale de la semelle et de la bague de jonction selon encore un autre mode de réalisation de l'ensemble à friction ;
- la figure 8 est une vue en coupe transversale de la semelle et de la bague de jonction selon encore un autre mode de réalisation de l'ensemble à friction ;
- la figure 9 est une vue en perspective de la semelle et de la bague de jonction d'une variante du mode de réalisation de l'ensemble à friction illustré en figure 8;
- la figure 10, déjà décrite, est une vue de dessus d'un ensemble à friction selon l'art antérieur ;
- la figure 11, déjà décrite, est une vue en coupe transversale selon la ligne XI-XI de l'ensemble à friction de la figure 10.

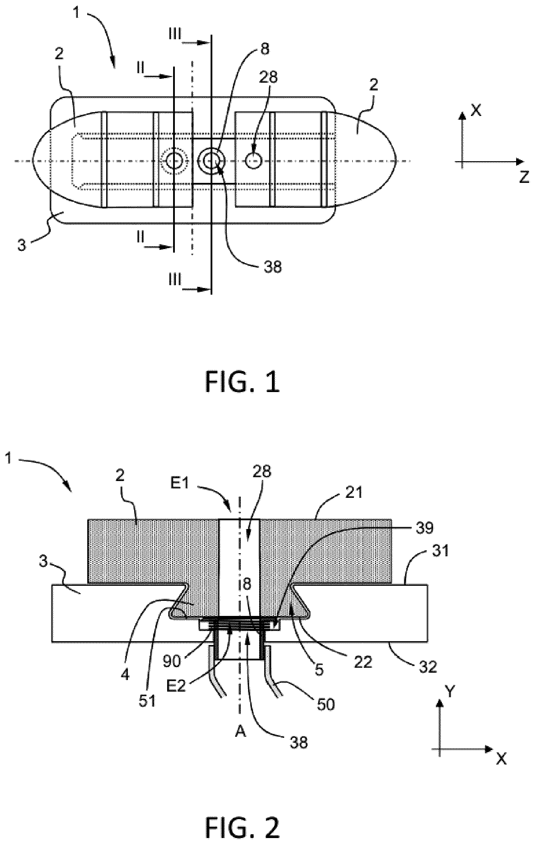

La figure 1 est une vue de dessus d'un ensemble de friction 1 pour système de freins à disques ferroviaire pour matériel roulant ferroviaire, selon l'invention, et la figure 2 une coupe transversale selon la ligne II-II de la figure 1.

Cet ensemble à friction 1 comporte un porte-semelle 3 qui s'étend dans sa plus grande direction selon une direction longitudinale Z, et transversalement selon une direction transversale X. Ainsi le porte-semelle 3 s'étend principalement dans le plan X-Z et comporte une face supérieure 31 destinée à accueillir une semelle de friction 2, et une face inférieure 32 qui s'étendent parallèlement à ce plan.

L'axe perpendiculaire à ces deux faces et au plan X-Z est un axe Y.

Le porte-semelle 3 présente sur sa face supérieure 31 une glissière d'accueil 5 concave en queue d'aronde, qui s'étend longitudinalement depuis une première extrémité du porte-semelle 3 jusqu'à proximité de la seconde extrémité du porte-semelle 3 où cette glissière 5 est non-débouchante. Le porte-semelle 3 comprend sur l'axe longitudinal Z deux trous traversant 38 espacés l'un de l'autre. Chaque trou traversant 38 relie la face inférieure 32 au fond 51 de la glissière 5.

Cet ensemble à friction 1 comporte également une semelle de friction 2. Cette semelle de friction 2 est en deux moitiés sensiblement identiques, où chaque moitié présente une face de friction (première face) 21 destinée à être en contact de friction avec le disque (non-représenté) du véhicule, et une face opposée 22 (seconde face). Cette face opposée 22 présente un profilé 4 convexe en queue d'aronde configuré pour coopérer de la façon la plus étroite possible avec la glissière d'accueil 5. Ce profilé 4 s'étend sur toute la longueur (selon la direction Z) de la moitié de la semelle 2.

La face du profilé 4 qui épouse le fond 51 et les côtés de la glissière 5 (lorsque le profilé est inséré dans cette glissière 5) est ainsi une partie de la face opposée 22.

Alternativement, le profilé 4 peut avoir un profil différent d'une queue d'aronde, et la glissière 5 un profil différent d'une queue d'aronde concave, à condition que ces deux profils soient complémentaires et conformés pour permettre un coulissement relatif de la semelle 2 et du porte-semelle 3 selon l'axe longitudinal Z et empêcher une désolidarisation de la semelle 2 du porte-semelle selon l'axe Y.

Avantageusement, la région du profilé 4 autour de chaque conduit 28 et la région de la glissière 5 autour de chaque trou 38 sont planes dans le plan X-Z et parallèles.

En utilisation, on enfonce une première moitié de la semelle 2 selon l'axe longitudinal Z en faisant coulisser le profilé 4 dans la glissière 5, jusqu'en butée de la glissière 5. Puis on enfonce la seconde moitié de la semelle 2 selon l'axe longitudinal Z en faisant coulisser le profilé 4 dans la glissière 5, jusqu'en butée de la première moitié de la semelle 2, les surfaces en contact de la première moitié et de la seconde moitié étant idéalement conformées pour s'épouser sur toute leur surface. La seconde face 22 de la semelle de friction 2, avec la queue d'aronde 4, épouse ainsi la face inférieure 32 et le fond 51 de la glissière du porte-semelle 3.

Chacune des moitiés de la semelle 2 comprend un conduit 28 (appelé aussi « conduit pneumatique ») orienté selon l'axe Y.

Ce conduit 28 met en communication étanche un premier espace E1 bordé par une première face 21 de la semelle 2 et un second espace E2 bordé par une seconde face 22 de la semelle de friction 2 opposée à ladite première face 21 et formant la face du profilé 4.

Lorsque les deux moitiés de la semelle 28 sont fixées sur le porte-semelle 3 en utilisation, chacun des deux conduits 28 est situé en regard d'un des trous 38. On désigne par axe A l'axe principal d'un conduit 28 et du trou 38 situé en regard, ce conduit 28 et ce trou 38 étant donc coaxiaux (il existe donc deux axes principaux A parallèles, un pour chaque ensemble d'un conduit 28 et d'un trou 38). Ainsi, chaque conduit 28 forme, avec un des trous traversant 38 ménagé dans le porte-semelle 3, un circuit qui permet d'aspirer des particules émises par la semelle de friction 2 lors du freinage.

Dans la description ci-dessus, le conduit 28 et le trou 38 sont coaxiaux d'axe principal A.

Alternativement, si l'on considère que l'axe A est l'axe principal du trou 38, le conduit 28 peut être incliné par rapport à l'axe A, depuis l'interface entre le trou 38 et le conduit 28 (l'orifice du conduit 28 débouchant à cette interface est centré sur l'axe A).

Ainsi, dans tous les modes de réalisation décrits ci-dessous en référence aux figures, le conduit 28 peut en variante être incliné par rapport à l'axe A du trou 38.

Dans tous les cas, le conduit 28 et le trou 38 sont en regard, ce qui signifie que l'orifice du conduit 28 débouchant à cette interface épouse le trou 38, de telle sorte que le conduit 28 prolonge le trou 38.

La semelle 28 a été décrite ci-dessus comme étant constituée de deux moitiés identiques. Alternativement, la semelle 28 est monobloc et de forme et dimension identiques à celle de ces deux moitiés réunies côte à côte comme en utilisation. La semelle 28 unique comporte alors deux conduits 28, ou un seul conduit 28, ou plus de deux conduits 28.

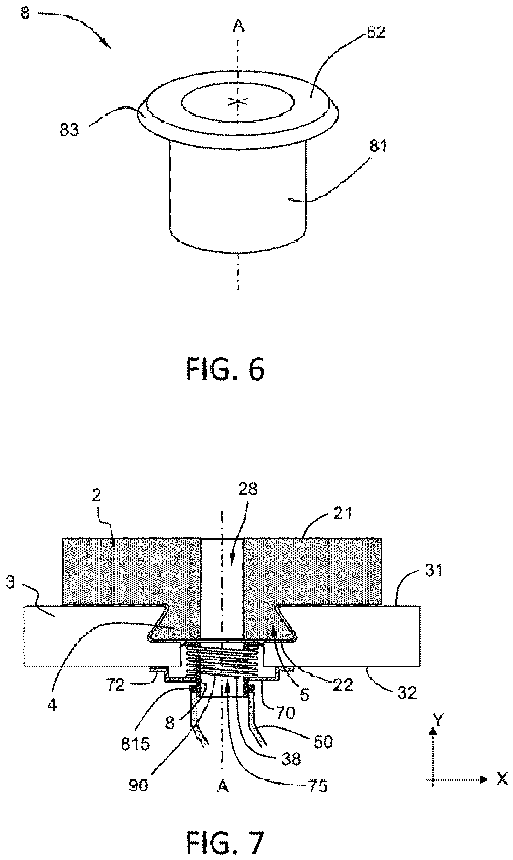

Une bague de jonction 8, constituée d'un tube 81 et d'une collerette 82 prolongeant radialement perpendiculairement à l'axe principal A et vers l'extérieur ce tube 81 à une de ses extrémités, est montée dans chacun des trous 38. La figure 6 est une vue en perspective d'une telle bague de jonction 8.

La bague 8 est donc coaxiale avec le trou 38.

Comme illustré en figure 2, le tube 81 de la bague de jonction 8 traverse entièrement le porte-semelle 3 et en dépasse sur sa face inférieure 32. Sur cette extrémité du tube 81 est fixé un tuyau 50 qui est relié à un mécanisme d'aspiration (non-représenté). Le tuyau 50 permet l'aspiration au travers du conduit 28 et du trou 38 des particules issues du freinage du véhicule ferroviaire.

La bague de jonction 8 sert à guider les particules issues du freinage depuis le conduit 28 de la semelle 2 vers le trou traversant 38 du porte-semelle 3.

Au niveau de la face 22 de la queue d'aronde 4, qui est en contact avec la bague 8, l'orifice du conduit 28 est en regard du trou du tube 81 et centré sur ce tube 81.

Avantageusement, comme représenté en figure 6, la périphérie radialement externe de la collerette 82 présente un chanfrein 83. Le chanfrein 83 s'étend selon la surface d'un cône d'axe central A, la collerette 82 se situant entre le sommet de ce cône et le tube 81.

L'avantage qu'apporte ce chanfrein 83 est précisé ci-dessous.

Le tube 81 est inséré dans le trou 38, le diamètre externe du tube 81 étant égal ou sensiblement égal au diamètre interne du trou 38 afin d'assurer la meilleure étanchéité possible entre le tube 81 et la paroi du trou 38, tout en permettant un coulissement du tube 81 selon l'axe principal A par rapport au porte-semelle 3.

La collerette 82 se loge dans un logement annulaire 39 du porte-semelle 3. Ce logement 39 est une cavité dans le fond de la glissière 5 et est centré sur l'axe principal A. Lorsque le profilé 4 est dans la glissière 5, le logement 39 est en regard de la face 22 du profilé 4, comme illustré en figure 2.

Dans le logement 39, entre la collerette 82 et le fond du logement 39 se loge un mécanisme de rappel 90 qui tend à éloigner la collerette 82 du de ce fond de logement 39.

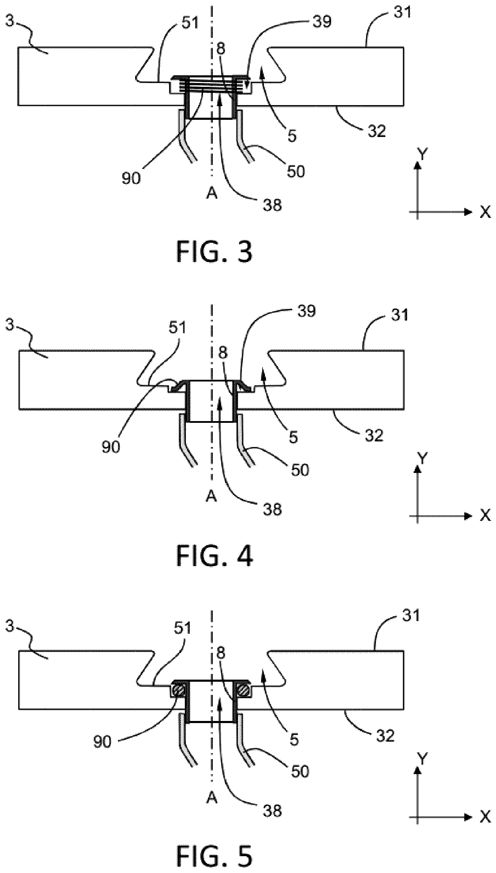

Par exemple, le mécanisme de rappel 90 est un ressort hélicoïdal qui est centré sur l'axe principal A. La figure 3 montre ce ressort au repos. La collerette 82, repoussée vers le haut par le ressort, dépasse alors au-dessus du fond de la glissière 5.

Lorsqu'on solidarise la semelle de friction 2 avec le porte-semelle 3 en faisant coulisser le profilé 4 dans la glissière 5, le bord de la seconde face 22 de la semelle 2 (qui est aussi la face du profilé 4) vient en contact d'une bague de jonction 8. Ce bord vient alors en appui sur le chanfrein 83. Grâce à l'inclinaison du chanfrein 83 par rapport à l'axe principal A, la force exercée par le bord de la seconde face 22 sur le chanfrein 83, lorsqu'on continue à faire coulisser le profilé 4 dans la glissière 5, enfonce automatiquement la bague 8 dans le logement 39. Le profilé 4 peut alors continuer à coulisser dans la glissière 5 en recouvrant la bague 8.

Si la collerette 82 ne présente pas de chanfrein 83, il est nécessaire d'enfoncer (par exemple manuellement) la bague 8 dans le logement 39 jusqu'à ce que la collerette 82 ne dépasse plus du fond de la glissière 5, afin de pouvoir continuer à coulisser le profilé 4 dans la glissière 5.

Dans tous les cas, une fois que le profilé 4 recouvre la collerette 82, la bague 8 est maintenue enfoncée dans le logement 39 par le profilé 4 de telle sorte que le mécanisme de rappel 90 est comprimé, et plaque la collerette 82 contre le profilé 4. L'étanchéité entre le conduit 28 et le trou 38, c'est-à-dire entre la semelle 2 et le porte-semelle 3, est ainsi assurée.

La bague de jonction 8 prévient ainsi d'éventuelles fuites au travers du conduit 28 et du trou 38. Notamment, la bague de jonction 8 permet de limiter la quantité de particules issues du freinage susceptibles de se glisser dans l'interstice à l'interface entre la semelle de friction 2 et le porte-semelle 3. La bague de jonction 8 permet surtout d'empêcher de l'air de pénétrer par cet interstice dans le trou 38, ce qui réduirait l'efficacité de l'aspiration par le dispositif d'aspiration.

Cette situation est illustrée en figures 2 et 3 dans le cas où le mécanisme de rappel 90 est un ressort hélicoïdal.

Le mécanisme de rappel 90 peut être de tout type, à condition qu'il plaque la collerette 82 contre le profilé 4 lorsque le profilé 4 recouvre la collerette 82.

Par exemple, le mécanisme de rappel 90 est la collerette 82 qui est conformée en un ressort annulaire (du type « rondelle Belleville »), comme illustré en figure 4.

Ainsi, la collerette 82 s'étend, depuis l'extrémité du tube 81, sensiblement selon la surface d'un cône d'axe central A, le tube 81 étant situé dans l'espace délimité par ce cône.

En figure 4 la collerette 82 est au repos. L'extrémité proximale de la collerette 82 (à sa jonction avec le tube 81) dépasse du fond de la glissière 5. L'extrémité distale de la collerette 82 est en contact avec le fond du logement 39.

Lorsqu'on appuie (manuellement ou par translation du profilé 4 dans la glissière 5) sur la collerette 82, celle-ci se déforme en flexion pour s'aplatir et se loger entièrement dans le logement 39. La collerette 82 résiste à cette déformation et se plaque donc ensuite contre le profilé 4.

Alternativement, la collerette 82 est plane (comme dans le mode de réalisation précédent en figures 2 et 3), et le mécanisme de rappel 90 est un joint annulaire élastique qui est logé dans le logement 39 entre la collerette 82 et le fond du logement 39. La figure 5 montre ce joint au repos. La collerette 82, repoussée vers le haut par le joint, dépasse alors au-dessus du fond de la glissière 5.

Lorsqu'on appuie (manuellement ou par translation du profilé 4 dans la glissière 5) sur la collerette 82, le joint se comprime et résiste à cette compression et se plaque donc ensuite contre le profilé 4.

La figure 7 illustre un autre mode de réalisation de l'invention.

La face inférieure 32 du porte-semelle 3 est munie d'un chapeau 70 annulaire centré sur l'axe central A. Ainsi, le chapeau 70 est muni en son centre d'un orifice central 75. Le bord radialement externe 72 de ce chapeau 70 est fixé sur la face inférieure 32. Le tube 81 passe au travers de l'orifice 75, dont le diamètre est égal au diamètre externe du tube 81 de façon à établir une étanchéité entre le tube 81 et le chapeau 70.

Le mécanisme de rappel 90 est un ressort hélicoïdal qui est centré sur l'axe principal A, dont une extrémité s'appuie sur la collerette 82 (qui est plane) et dont l'autre extrémité appuie sur le chapeau 70 de telle sorte que le ressort tend à repousser la collerette 82 vers le haut et à la faire dépasser au-dessus du fond de la glissière 5.

Le tube 81 présente sur sa face externe une excroissance radiale 815 qui vient en butée contre le chapeau 70 de façon à empêcher le tube 81 de coulisser hors du chapeau 70 sous l'action du ressort.

Alternativement, le tube 81 est suffisamment long pour que, lorsque le ressort est au repos, le tube 81 soit toujours en contact du chapeau 70 et dépasse en dessous de ce chapeau 70 pour permettre la fixation du tuyau 50 sur l'extrémité du tube 81.

La figure 7 montre le ressort en compression, dans la configuration où le profilé 4 est inséré dans la glissière 5 au-dessus du trou 38. Le ressort plaque alors la collerette 82 contre le profilé 4.

Dans tous les modes de réalisation de l'invention, tels que ceux décrits ci-dessus, les dimensions (et notamment le diamètre) de la collerette 82 sont choisies pour que, une fois le profilé 4 est inséré dans la glissière 5 au-dessus du trou 38, la collerette 82 est en contact avec la face interne du trou 38, ou du logement 39 le cas échéant. Cela contribue à l'étanchéité globale entre le trou 38 et le conduit 28.

Avantageusement, l'espace délimité par le trou traversant 38 et le chapeau 70 constitue une chambre, et lorsque la bague 8 est maintenue contre le profilé 4, cette chambre est étanche avec pour seuls orifices ceux du tube 8. Cela contribue à l'étanchéité globale entre le trou 38 et le conduit 28.

Le chapeau 70 a été décrit ci-dessus comme recouvrant un seul trou 38. Alternativement, dans le cas où le porte-semelle comporte deux trous 38, le chapeau 70 peut avoir une forme oblongue afin de recouvrir ces deux trous. Dans une première variante, la géométrie du chapeau 70 autour de chacun des trous 38, et la géométrie de chaque bague 8, sont telles qu'illustrées en figure 7. Le chapeau 70 présente donc deux orifices 75, chacun traversé par une bague 8.

Dans une seconde variante, le chapeau 70 présente un orifice 75 unique sur lequel se fixe le tuyau 50. Chacune des deux bagues 8 (une par trou 38) débouche alors dans la chambre oblongue délimitée par le chapeau 70. Le chapeau 70 présente alors deux excroissances internes sur lesquelles chaque ressort 90 prend appui, ces excroissances servant également à limiter la course (vers le haut sur les figures) du ressort 90.

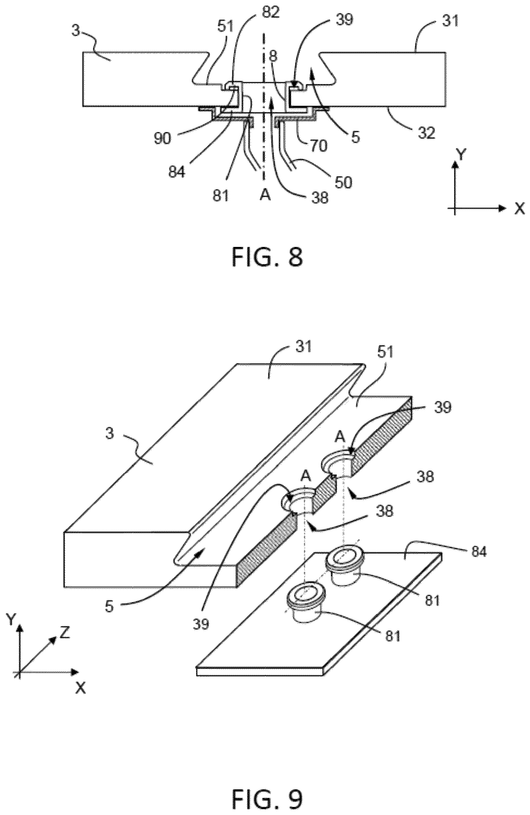

La figure 8 illustre un autre mode de réalisation de l'invention.

La bague de jonction 8 présente un tube 81 et une collerette 82. La collerette 82 est conformée afin d'agir comme le mécanisme de rappel 90. Ainsi, la collerette 82 présente à son extrémité radialement externe une lèvre qui se replie vers le tube 81. Lorsque la semelle 2 appuie sur la bague 8 selon l'axe A, la lèvre se déforme afin de remplir le logement 39, assurant ainsi l'étanchéité avec la semelle 2.

Le tube 81 se prolongeant à son extrémité opposée à l'extrémité portant la collerette 82 par une plaque 84 qui épouse la face inférieure 32 du porte-semelle 3. Lorsque le tube 81 est logé dans le trou 38, la plaque 84 est ainsi en appui sur la face inférieure 32. L'avantage de cette configuration est que la réalisation de l'étanchéité entre le porte-semelle 3 et la semelle 2 est réalisée de façon simple par insertion du tube 81 et de la collerette 82 dans le trou 83, sans qu'il soit nécessaire d'utiliser un mécanisme de rappel distinct.

De plus, la bague 8 est maintenue en place dans le trou 38 grâce à la plaque 84.

La face inférieure 32 du porte-semelle 3 est munie d'un chapeau 70 qui est fixé sur cette face inférieure 32 et qui entoure la plaque 84. Le chapeau 70 est muni d'un orifice sur lequel le tuyau 50 vient se fixer de façon étanche. Le chapeau 70 délimite ainsi une chambre.

La figure 9 illustre une variante du mode de réalisation de l'ensemble à friction de la figure 8.

La plaque 84, au lieu de porter une seule bague de jonction 8, porte deux bagues de jonction 8. Ainsi, le tube 81 de chacune des bagues 8 se prolonge à son extrémité opposée à l'extrémité portant la collerette 82 par la plaque 84.

La semelle 3 est représentée en perspective et en coupe longitudinale (dans le plan vertical Y-Z) en son milieu, c'est-à-dire au milieu de la glissière 5. L'ensemble de la plaque 84 et des bagues de jonction 8 est représenté en perspective éclatée. Les deux bagues 8 sont destinées à être insérées dans les trous 38 selon les axes principaux A, dans la direction de l'axe vertical Y.

L'avantage de cette variante est qu'avec un seul ensemble constitué de la plaque 84 et des bagues de jonction 8 il est possible de réaliser l'étanchéité entre tout le porte-semelle 3 et toute la, ou les, semelles 2.

La plaque 84 peut porter deux bagues 8, ou davantage en fonction du nombre total de trous 38 dans le porte-semelle 3.

Selon un autre mode de réalisation, le mécanisme de rappel 90 qui plaque la bague 8 contre le profilé 4 est réalisé par deux éléments qui s'attirent à distance.

Par exemple, cette attraction est magnétique. Ainsi, la collerette 82 de la bague 8 comporte un aimant annulaire (ou une pluralité d'aimants répartis sur sa circonférence) qui constitue le premier des deux éléments. La région de la seconde face 22 du profilé 4 autour du conduit 28 constitue le second des deux éléments lorsque le profilé est en acier. Ainsi, lorsque le profilé 4 est inséré dans la glissière 5 au-dessus du trou 38, le champ magnétique d'attraction entre l'aimant de la collerette 82 et le profilé 4 plaque la collerette 82 contre le profilé 4. Si le profilé 4 est en un matériau qui n'est pas ferromagnétique, on insère un aimant annulaire autour du conduit 28, cet aimant constituant alors le second des deux éléments.

## Revendications

1. Ensemble à friction (1) pour système de freins à disques ferroviaire pour matériel roulant ferroviaire, ledit ensemble à friction (1) comprenant d'une part un porte-semelle (3) comprenant une face supérieure (31) avec une glissière d'accueil (5), et une face inférieure (32), et d'autre part au moins une semelle (2) en matériau de friction comprenant une première face (21) qui est la face de friction, et une seconde face (22) munie d'un profilé (4) configuré pour coopérer avec la glissière d'accueil (5), ladite semelle (2) comprenant au moins un conduit (28) mettant en communication étanche un premier espace (E1) bordé par ladite première face (21) et un second espace (E2) bordé par ladite seconde face (22), ledit ensemble à friction (1) comprenant en outre au moins un trou traversant (38) d'axe central A, ménagé dans le porte-semelle (3) et situé en regard d'un dudit au moins un conduit (28), et au moins une bague de jonction (8) agencée dans ledit au moins un trou traversant (38) et établissant une jonction avec ledit au moins un conduit (28), ledit ensemble à friction (1) étant **caractérisé en ce qu'**il comporte un mécanisme de rappel (90) qui est apte à plaquer ladite au moins une bague de jonction (8) contre ledit profilé (4).

2. Ensemble à friction (1) selon la revendication 1 **caractérisé en ce que** ledit mécanisme de rappel (90) est un ressort.

3. Ensemble à friction (1) selon la revendication 1 ou 2 **caractérisé en ce que** ladite bague de jonction (8) présente un tube (81) et une collerette (82), ledit mécanisme de rappel (90) étant apte à plaquer ladite collerette (82) contre ledit profilé (4).

4. Ensemble à friction (1) selon la revendication 2 **caractérisé en ce que** ladite bague (8) présente un tube (81) et une collerette (82), et ledit ressort est un ressort hélicoïdal prenant appui à une extrémité sur ladite collerette (82) à son autre extrémité sur ledit porte-semelle (3).

5. Ensemble à friction (1) selon la revendication 3 **caractérisé en ce que** ladite bague (8) présente un tube (81) et une collerette (82) conique, ladite collerette (82) agissant comme ledit mécanisme de rappel (90).

6. Ensemble à friction (1) selon la revendication 2 ou 3, **caractérisé en ce que** ladite bague (8) présente un tube (81) et une collerette (82), **en ce que** ladite face inférieure (32) du porte-semelle (3) est munie d'un chapeau (70) qui forme avec ledit trou traversant (38) une chambre, et **en ce que** ledit mécanisme de rappel (90) est un ressort hélicoïdal entourant le tube (81) et prenant appui à une extrémité sur ladite collerette (82) et à son autre extrémité sur la face interne dudit chapeau (70).

7. Ensemble à friction (1) selon l'une quelconque des revendications 3 à 6 **caractérisé en ce que** la périphérie radialement externe de ladite collerette (82) présente un chanfrein (83) qui s'étend selon la surface d'un cône d'axe central A.

8. Ensemble à friction (1) selon l'une quelconque des revendications précédentes, **caractérisé en ce que** ladite semelle (2) comprend deux conduits (28), et ledit porte-semelle (3) comporte deux trous traversant (38), chacun desdits conduits (28) étant en regard d'un des deux trous traversant (38).

9. Ensemble à friction selon la revendication 1 **caractérisé en ce que** ladite bague de jonction (8) présente un tube (81) et une collerette (82), ladite collerette (82) agissant comme ledit mécanisme de rappel (90), ledit tube (81) se prolongeant à son extrémité opposée à l'extrémité portant ladite collerette (82) par une plaque (84) qui épouse ladite face inférieure (32) du porte-semelle (3).

## Patentansprüche

1. Reibanordnung (1) für ein Eisenbahn-Scheibenbremsensystem für Eisenbahn-Schienenfahrzeuge, wobei die Reibanordnung (1) einerseits einen Belaghalter (3), welcher eine obere Fläche (31) mit einem Aufnahmeschlitten (5) und eine untere Fläche (32) umfasst, und andererseits wenigstens einen Belag (2) aus Reibmaterial umfasst, welcher eine erste Fläche (21), welche die Reibfläche ist, und eine zweite Fläche (22) umfasst, welcher mit einem Profil (4) versehen ist, welches dazu eingerichtet ist, mit dem Aufnahmeschlitten (5) zusammenzuwirken, wobei der Belag (2) wenigstens eine Leitung (28) umfasst, welche einen ersten Raum (E1), welcher durch die erste Fläche (21) begrenzt ist, und einen zweiten Raum (E2), welcher durch die zweite Fläche (22) begrenzt ist, in abgedichtete Kommunikation versetzt, wobei die Reibanordnung (1) ferner wenigstens Durchgangsloch (38) mit Mittelachse A umfasst, welches in dem Belaghalter (3) gebildet und gegenüber der wenigstens einen Leitung (28) angeordnet ist, sowie wenigstens einen Verbindungsring (8), welcher in dem wenigstens einen Durchgangsloch (38) aufgenommen ist und eine Verbindung mit der wenigstens einen Leitung (28) herstellt, wobei die Reibanordnung (1) **dadurch gekennzeichnet ist, dass** sie einen Rückstellmechanismus (90) umfasst, welcher dazu in der Lage ist, den wenigstens einen Verbindungsring (8) gegen das Profil (4) zu pressen.

2. Reibanordnung (1) nach Anspruch 1, **dadurch gekennzeichnet, dass** der Rückstellmechanismus (90) eine Feder ist.

3. Reinanordnung (1) nach Anspruch 1 oder 2, **dadurch gekennzeichnet, dass** der Verbindungsring (8) ein Rohr (81) und einen Kragen (82) aufweist, wobei der Rückstellmechanismus (90) dazu in der Lage ist, den Kragen (82) gegen das Profil (4) zu pressen.

4. Reibanordnung (1) nach Anspruch 2, **dadurch gekennzeichnet, dass** der Ring (8) ein Rohr (81) und einen Kragen (82) aufweist und die Feder eine Schraubenfeder ist, welche an einem Ende an dem Kragen (82) und an ihrem anderen Ende an dem Belaghalter (3) anliegt.

5. Reibanordnung (1) nach Anspruch 3, **dadurch gekennzeichnet, dass** der Ring (8) ein Rohr (81) und einen konischen Kragen (82) aufweist, wobei der Kragen (82) als der Rückstellmechanismus (90) wirkt.

6. Reibanordnung (1) nach Anspruch 2 oder 3, **dadurch gekennzeichnet, dass** der Ring (8) ein Rohr (81) und einen Kragen (82) aufweist, dass die untere Fläche (32) des Belaghalters (3) mit einer Kappe (70) versehen ist, welche mit dem Durchgangsloch (38) eine Kammer bildet, und dass der Rückstellmechanismus (90) eine Schraubenfeder ist, welche das Rohr (81) umgibt und an einem Ende an dem Kragen (82) und an ihrem anderen Ende an der inneren Fläche der Kappe (70) anliegt.

7. Reibanordnung (1) nach einem der Ansprüche 3 bis 6, **dadurch gekennzeichnet, dass** der äußere radiale Umfang des Kragens (82) eine Abschrägung (83) aufweist, welche sich entlang der Fläche eines Kegels mit Mittelachse A erstreckt.

8. Reibanordnung (1) nach einem der vorhergehenden Ansprüche, **dadurch gekennzeichnet, dass** der Belag (2) zwei Leitungen (28) umfasst und der Belaghalter (3) zwei Durchgangslöcher (38) umfasst, wobei jede der Leitungen (28) einem der beiden Durchgangslöcher (38) gegenüberliegt.

9. Reibanordnung nach Anspruch 1, **dadurch gekennzeichnet, dass** der Verbindungsring (8) ein Rohr (81) und einen Kragen (82) aufweist, wobei der Kragen (82) als der Rückstellmechanismus (90) wirkt, wobei sich das Rohr (81) an seinem Ende gegenüber dem Ende, welches den Kragen (82) trägt, durch eine Platte (84) erstreckt, welche zu der unteren Fläche (32) des Belaghalters (3) passt.

## Claims

1. Friction assembly (1) for a railway disc brake system for railway rolling stock, said friction assembly (1) comprising, on the one hand, a brake head (3) comprising an upper face (31) with a receiving slide (5), and a lower face (32), and on the other hand, at least one shoe (2) of friction material and comprising a first face (21) which is the friction face, and a second face (22) provided with a profile member (4) configured to engage with the receiving slide (5), said shoe (2) comprising at least one duct (28) establishing sealed communication between a first space (E1) bordered by said first face (21) and a second space (E2) bordered by said second face (22), said friction assembly (1) further comprising at least one through-hole (38) of central axis A, provided in the brake head (3) and located in line with one of said at least one duct (28), and at least one connection bushing (8) arranged in said at least one through-hole (38) and forming a connection with said at least one duct (28), said friction assembly (1) being **characterized in that** it comprises a return mechanism (90) which is able to press said at least one connection bushing (8) against said profile member (4).

2. Friction assembly (1) according to claim 1, **characterized in that** said return mechanism (90) is a spring.

3. Friction assembly (1) according to claim 1 or 2, **characterized in that** said connection bushing (8) has a tube (81) and a flange (82), said return mechanism (90) being adapted to press said flange (82) against said profile member (4).

4. Friction assembly (1) according to claim 2, **characterized in that** said bushing (8) has a tube (81) and a flange (82), and said spring is a coil spring with one end bearing on said flange (82) and the other end on said brake head (3).

5. Friction assembly (1) according to claim 3, **characterized in that** said bushing (8) has a tube (81) and a conical flange (82), said flange (82) acting as said return mechanism (90).

6. Friction assembly (1) according to claim 2 or 3, **characterized in that** said bushing (8) has a tube (81) and a flange (82), said lower face (32) of the brake head (3) is provided with a cap (70) which together with said through-hole (38) forms a chamber, and said return mechanism (90) is a coil spring surrounding the tube (81) and bearing on said flange (82) at one end and on the inside face of said cap (70) at the other end.

7. Friction assembly (1) according to any one of claims 3 to 6, **characterized in that** the radially outer periphery of said flange (82) has a chamfer (83) which extends along the surface of a cone of central axis A.

8. Friction assembly (1) according to any one of the preceding claims, **characterized in that** said shoe (2) comprises two ducts (28), and said brake head (3) comprises two through-holes (38), each of said ducts (28) being in line with one of the two through-holes (38).

9. Friction assembly according to claim 1, **characterized in that** said connection bushing (8) has a tube (81) and a flange (82), said flange (82) acting as said return mechanism (90), said tube (81) being extended at its end opposite to the end carrying said flange (82) by a plate (84) which fits against said lower face (32) of the brake head (3)
